# EUROPEAN PATENT APPLICATION

(11) **EP 2 963 977 A1**
(43) Date of publication of application: **06.01.2016**
(21) Application number: 14306070.5
(22) Date of filing: 01.07.2014
(51) Int. Cl.: H04W 48/16

(54) **Method for providing information representative of available resources for end-user wireless communication equipment**

(71) Applicant: ALCATEL LUCENT, 92100 Boulogne-Billancourt (FR)
(72) Inventor: Le Pallec, Michel, 91620 NOZAY (FR); Vigoureux, Martin, 91620 NOZAY (FR)
(74) Representative: Hirsch & Associés

(57) **Abstract**

A method for providing information relative to resources accessible via a wireless network comprising wireless access points for items of end-user wireless communication equipment comprises providing for each resource a unique information element which is introduced into a specific wireless signaling channel for transmission to at least an item of wireless communication equipment where the information element is extracted from the wireless signaling channel and processed jointly with the wireless transmission for presentation together with wireless network information for items of end-user wireless communication equipment prior to the latter establishing any connection with the wireless network identified by the wireless network identifier.

## Description

### FIELD OF THE INVENTION

The present invention relates to the advertisement of the existence of sources and resources which are directly attached to wireless access point (such as WiFi hotspots, LTE base stations or the like) to item of wireless communication equipment by wireless transmission.

### BACKGROUND OF THE INVENTION

The number of network-attached resources, sometimes in the form of virtual resources (i.e. ressources that are being sliced and shared by others or which result from combinations of shared resources) that are becoming available for use by users at end-user communication equipment via wireless communications is increasing at a phenomenal rate. This is being made possible by the increasing capabilities of wireless networks such as LTE (Long Term Evolution) networks and WiFi wireless local area networks, the latter offering hotspots in public places or community-restricted access (e.g. access restricted to subscribers of a given Internet Service Provider). Also, more and more, residential home and small-office/home-office gateways are using the capabilities of WiFi access.

The term "resource" as used herein designates capabilities or service elements offered by any type of virtual or physical element (hardware and/or software) that an entity/owner can put at another entity's/client's disposal. The term resource also covers the source where services and capabilities are available. A resource may be a computing means, a processing means, a communication means, a storage means, a connected object (such as an Internet of Things (or IoT) device), or content such as a VOD (video on demand) content, or other services, these simply being examples. The invention particularly concerns, but is not limited to, resources in the form of IoT (Internet of Things) devices, computing facilities, storage and content.

The term 'resource description' used in this document simply refer to the description of resources.

The term 'end user' refers indiscriminately to wireless residential clients (home networking clients), mobile clients (i.e. mobile terminals), private entities (enterprises) or machines (M2M - Machine-to-Machine) who are using wireless communications.

Items of end-user wireless communication equipment as referred to herein mean any device/object adapted to use wireless communications. This device/objet may, among other things, be a smartphone, an actuator, a computer, a tablet, without this list being limiting. Conceptually, an item of end-user wireless communication equipment represents the final element (or the 'client') of a service chain. Items of end-user wireless communication are consequently also referred to herein as wireless clients.

The above deployment trend is facilitated by the fact that wireless technologies (WiFi hotspots/ LTE (femto/ micro-base stations or base stations) make it possible to seamlessly deploy these services and resources close to end-users in view of their pseudo-location-free nature for serving mobile/roaming end-users or enterprises. As a result, more and more computing infrastructure/platform, services, storage and IoT (Internet of things) resources and content are likely to be associated with base stations and wireless 'hotspots' serving end-users (meaning in the access part of the network). This invention focuses on, but is not limited to, the situation where the said association between wireless network and resources is considered as local meaning that resources/services such as IoT (Internet of Things) resouces, content, storage and computing facilities) are directly 'attached' (as explained below) to wireless access point (such as Wifi hotspots, LTE base stations or the like).

Now, currently, only the administrator of a wireless access point can have knowledge of what resources are attached to a wireless access point and which can be proposed to end users for use from their items of wireless communication equipment. The end user does not have this information, and would need to connect to the wireless access point before he/she/it can discover what resources might be available for use, and optionally what their capabilities might be. As more and more resources are becoming available, establishing a connection to search for resources with each wireless access point one after the other is unnecessarily time and bandwidth consuming.

It could be possible to use an independent medium for informing end users of the existence of resources that are locally accessible through a wireless network. In this case, once an item of communication equipment is connected to an access point (for instance of the WiFi type), then, for instance, the user, opening his/her browser, could be prompted with a page displaying information on resources/ services available on that Local Area Network. However, the limitation of not knowing a priori (before connecting to the WiFi network) the availability of resources still exists. This is particularly inconvenient in the now quite common situation where multiple WiFi (and LTE and similar) networks are available at a given point. The end user would have to connect to (and disconnect from), for example, the various WiFi networks in order to discover the availability of IoT, computing or other resources and capabilities and services. In this example, in addition to using WiFi, other wireless technologies such as (femto) LTE (or 3G) could also be considered since end users increasingly have the possibility of connecting to different ISPs (Internet Service Providers) or mobile operators (by using for instance a mobile subscription card for a given amount of data). Nevertheless, the availability of a resource designated in a displayed page is not stated, and therefore the end user may still have to establish several connections to several networks before discovering an available resource of interest.

### SUMMARY OF THE INVENTION

An aim of this invention is to overcome the inherent problems discussed above, and notably to allow a wireless end user to discover the existence of resources corresponding to his/her/its needs and optionally to the capabilities of his/her/its communication equipment, without setting up any connection to the sources or providers of these resources.

The invention makes it possible to advertise the existence of all resources, capabilities and services of interest for the end user, in particular IoT capabilities, content, storage and computing facilities accompanied by wireless (LTE, WiFi, 3G and above...) network information. Joint advertisement of wireless network information (enabling a connection to be set up) and of the resources (with related features) available once connected allows a first selection of wireless access points (before connection) to be made in line with the user's expectations. The present invention particularly focuses on the advertisement of IoT (Internet of Things) resources, content and of storage and computing capabilities and resources and services.

To this effect the invention provides a method for providing information to items of end-user wireless communication equipment concerning resources and services available through a wireless access point for use by items of end-user wireless communication equipment using wireless signalling, comprising the steps of:
- maintaining at wireless access point level resource and service information relating to the use of a resource attached to said wireless access point by items of end-user wireless communication equipment in the form of a resource description,
- at said wireless access point, introducing said resource description in the form of a unique information element comprising an element identifier designating an available resource, a value defining length, and data describing this resource, optionally accompanied by one or more information sub-elements, into a specific wireless signaling channel for wireless transmission to items of end-user wireless communication able to receive said transmission,
- at an item of end-user communication equipment, receiving said specific wireless signaling channel and extracting said information element and said one or more information sub-elements if present from said specific wireless signaling channel and processing it or them jointly with processing of the wireless transmission,
- after optional filtering, making available, to said item of end-user communication equipment resource and service information contained in the information element and sub-element(s) if present together with wireless network information in the form of a wireless network identifier whereby said resource and service information is put at the disposal of an end user at said item of end-user wireless communication equipment prior to establishing any connection with said wireless network identified by said wireless network identifier.

The solution proposed by the invention makes it possible to advertise the existence of all resources, capabilities and services of interest for the end-user, specifically IoT based services, computing, storage, content services and resources, together with the wireless (LTE, WiFi, 3G...) network information. The invention allows for a first selection of wireless access points (before connection) according to end-user objectives. The value and unique benefit of this is the joint advertisement of wireless network information (with wireless capabilities) (making connection to resources possible) and of the resources themselves, as defined above, optionally with their related features available once connected.

The method can include the step of allowing said end user at said item of end-user wireless communication equipment to establish a connection with said wireless network identified by said wireless network identifier and, if certain conditions are satisfied, make use of said resource and services.

Preferably, the said specific wireless signalling channel is a physical broadcast channel (PBCH).

The dedicated information element can be comprised either in a Master Information Block or in a System Information Block that is transmitted within said physical broadcast channel (PBCH).

The resources are preferably in the form of content, IoT (Internet of Things) devices, computing facilities and storage facilities, and their capabilities.

The invention includes the capability for wireless network management software running on an item of end-user wireless communication equipment or wireless client to make available, to the user, resource/ service information contained in the Information Element similarly to the way it does for the currently defined wireless network information (e.g., the wireless network identifier). This software could also have the capabilities to proceed to a filtering step of the advertized information for a seamless (and automated) selection of the relevant access point according to profiles and service requests of wireless clients. More particularly, the said optional filtering step of the resource information carried by the information element and sub-element(s) can, in an embodiment, take account of profiles and service requests made by wireless clients in order to perform a seamless and automated selection of the relevant resource network access point. More particularly, the optional filtering step of the information element and sub-element(s) if present can comprise running wireless network management software on said item of end-user communication equipment to make available, to the user of said item of end-user communication equipment, the resource and service information contained in an information element and information sub-element if present taking account of at least one of the fact of belonging to a location-based service, popularity of resources, user profile, and/or user requests or expectations, and including the step of performing seamless and automated selection of a relevant resource network access point where resources satisfying at least one and preferably more criteria of said filtering step are satisfied.

According to an embodiment of the method according to the invention, the said resource description may further describe network (and customer) requirement(s) for accessing the available resource.

A futher advantage can arise, for example, in the case of IaaS (Infrastructure as a Service) devices and hardware, discussed below. One-step selection of a wireless network meeting both the transmission and resources (computing, IoT) requirents and expectations of the user has the advantage over a connected approach in that advertisment without initial connection can lead to saving battery life (of connectable devices) as well as management resources (i.e. connection states).

According to another embodiment of the method according to the invention, the resource description may describe either an IaaS (Infrastructure as a Service) model comprising hardware resources presented as a service manageable by an external operating system at the customer side through a dedicated driver, or a PaaS (Platform as a Service) model with an operating system - driving local or remote hardware resources- presenting Application Programming Inteface (APIs) as service access to customer (softwares) or else a SaaS (Software as a Service) model presenting computing software or a computing function as a service presented to customers and especially presenting the availability of such a computing function in the form of a dedicated application.

When advertising PaaS (Platform as a Service) ressources, presentation of network (and customer) requirements for platform/ end-user interaction can also be included in said resource descriptions.

According to a further embodiment of the method according to the invention, a hierarchical classification of the information elements is provided for, whereby a resource description describes either platform resources with underlying hardware resources, or a dedicated application and underlying platform resources, or else a dedicated application with underlying platform resources and underlying hardware resources.

Further, according to an embodiment of the method according to the invention, the dedicated information element further comprises at least one said sub-element giving detailed information relative either to the hardware resources, or the platform resources, or else the dedicated application.

Further according to another embodiment of the method according to the invention, the method may comprise an additional filtering step during which the information elements transmitted to an item of end-user wireless communication equipment are filtered to limit or restrict presentation of resource descriptions before being presented to an item of end-user wireless communication equipment.

According to one embodiment, said additional filtering step performed at a wireless access point level is adapted to limit the number of advertised resources in order to only present resources identified as being relevant to end users.

This additional filtering step performed at a wireless access point level for limiting the number of advertised resources presented to end-user communication equipment can take account of data collected on requests for resources and optionally user expectations in order to thereby prioritize for presentation to end end-user communication equipment those IoT, storage, content or computing resources which best meet end-user service requests and expectations.

A filtering step of this type makes it possible to address the scalability issue arising as more and more resources are proposed to end users.

According to one embodiment, the method includes advertising a quality indicator of presented services by means of a classification of computing resources in a sub-element that comprises a computing QoS field for reducing the amount of advertised information carried by wireless signaling.

According to one embodiment, following the advertising of resources and service capabilities to end users, the method includes the step of, before allowing said end user at said item of end-user wireless communication equipment to establish a connection with said wireless network identified by said wireless network identifier and make use of said chosen resource and services, the said certain condition to be satisfied comprises applying an authorization step allowing access to the resources and services selected by an end user, taking account of considerations such as privacy, security and integrity requirements.

The newly defined information element within a Physical Broadcast Channel (PBCH) advertises real time availability of computing capabilities and services attached a wireless access point. There could nevertheless be a temporal mismatch between presentation of service state and service use after connection. To deal with this possible real time resource unavailability or a divergence between presentation of resources and connection thereto, an indication of the probability of resources being available at a given time (or after a certain time interval) can also be provided in addition to advertisement of real time availability. More specifically, according to a further embodiment of the method according to the invention, a dedicated information element may further comprise a probability of availability of the available resource within a chosen time interval. This dedicated information element can, according to one embodiment, advertise real time availability of resources accessible while connecting to a wireless access point and optionally in the case of resource /service unavailability or connection mismatch, an indication of a probability of resource availability at a given time or after a certain time interval.

In one embodiment, before advertising resources to end users, the method can include, where an administrator of the wireless access point managing a network can derive knowledge of resources owned by its customers from at least said information elements, the step of proposing resources to other end-user communication equipment on a per-customer basis or on the basis of a community consisting of machines or people sharing a common point/interest.

The invention also provides a computer program product comprising a set of instructions arranged, when executed by processing means, for performing at least one step of the method according to the various embodiments above to provide information relative to resources, accessible via a wireless network comprising wireless access points, to items of end-user wireless communication equipment within the connectivity area of these wireless access points.

The invention further provides processing means suitably configured for introducing, at a wireless access point of a wireless network, a dedicated information element comprising at least one element designating an available resource, a value defining length, and a resource description describing said available resource and one or more information sub-elements if present into a specific channel, preferably a physical broadcast channel (PBCH) of a wireless signalling channel for transmission within said channel to at least one item of end-user wireless communication equipment which is within the connectivity area of said wireless access point.

The invention further provides suitably configured processing means configured for extracting, at an item of end-user wireless communication equipment, a dedicated information element, comprising at least one element designating an available resource, a value defining length, and a resource description describing said available resource and one or more information sub-elements if present from a physical broadcast channel (PBCH) of a wireless signalling channel received by said item of end-user wireless communication equipment and processing it or them simultaneously with the processing of the wireless transmission, whereby information on resources present in said dedicated information element and one or more information sub-elements if present can be put at the disposal of at least one item of end-user wireless communication equipment when the latter is within the connectitivity area of a wireless access point.

Other features and advantages of the invention will become apparent on examining the detailed specifications hereafter and the appended drawings.

### BRIEF DESCRIPTION OF THE DRAWINGS

- Figure 1 schematically and functionally illustrates an example of wireless local area networks and wireless access points in which the method according to the invention can be carried out.
- Figure 2 shows the generic format of an Information Element
- Figure 3 shows the generic format of an Information sub-element
- Figure 4 illustrates IaaS, PaaS and SaaS advertisement through wireless signaling, focused on computing resources
- Figure 5 illustrates IaaS, PaaS and SaaS advertisement through wireless signaling, focused on sensors and actuators.

### DETAILED DESCRIPTION OF PREFERRED EMBODIMENTS

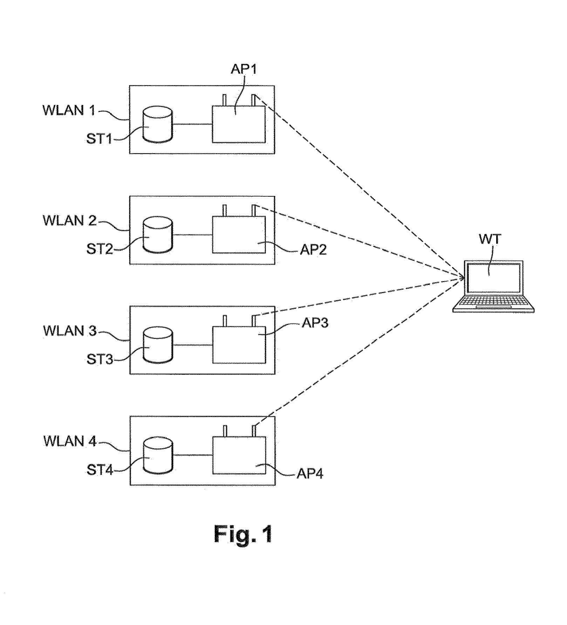

The invention notably, provides a method for providing information relative to resources, accessible via wireless access points, for items of end-user wireless communication equipment prior to connection to these wireless access points. The resources considered here are particularly computing and storage resources, content (such as films) and Iot (Internet of Things) resources (such as networked cameras, networked displays, etc),
A non-limiting example showing wireless local area networks and wireless access points is illustrated in Figure 1. Figure 1 shows four exemplary wireless local area networks WLAN1, WLAN2, WLAN3, WLAN4, where the method according to the invention is applied. In practice, many more wireless local area networks may be present. Wireless local area network WLAN1 comprises an access point AP1 and carries descriptions of resources as defined herein (shown stored at ST1) which are available at this particular access point AP1. Similarly, wireless local area network WLAN2 comprises an access point AP2 and carries descriptions of resources (shown stored at ST2) which are available at this particular access point AP2. Wireless local area network WLAN3 comprises an access point AP3 and and carries descriptions of resources (shown stored at ST3) which are available at this particular access point ST3. Finally, wireless local area network WLAN4 comprises an access point AP4 and carries descriptions of resources (shown stored at ST4) which are available at this particular access point ST4. These local area networks include other network elements that are conventional and not represented on this figure.
One example of a wireless terminal WT is within the connectivity area of the four access points AP1, ..., AP4 in this example. The wireless terminal WT may be a smartphone, a tablet, a personal computer with a WiFi adapter/receiver, a Long Term Evolution (LTE) receiver or any other item of end-user wireless communication equipment. The later term is used herein to refer to all these, and is synonomus herein with the term wireless client.
As said, there may be many more access points. Access points are to be considered as any point where a suitable wireless signal is available and may include LTE (Long Term Evolution) and femto/ micro/ macro base stations. Generally, the invention applies to all wireless technologies (whether these be WiFi 802.11AC, Zigbee, Bluetooth, 3G, etc.)

Specifically, the invention aims at defining how resources and capabilities are described for subsequent presentation by wireless acces points. Wireless access points can be attached to multiple nodes of a network architecture (whether this be CPE/ Customer Premises Equipment, AN/ Access Node, Next generation BNG/ Border Network Gateway, etc) in the Edge/Access area.

Resources, described as attached to wireless access points, may be physically located at those points or attached to a wireless access point by a suitable link.

The method according to the invention comprises a step that may be performed when it is desired to advertise the existence of one or more resources available from a source or provider of resources. The step involves providing a new dedicated information element, comprising at least an information element designating an available resource, a value defining length, and a resource description describing an available resource and in a subsequent step, transmiting this new dedicated information element to at least one item of end-user wireless communication equipment providing an access to this available resource within a chosen wireless signalling channel. This allows this information element to be put at the disposal of at least one item of end-user wireless communication equipment when the latter is within the connectivity area of one of these wireless access points AP1, ..., AP4. As a consequence, a resource, available at a given instant via wireless access points AP1, ..., AP4, can be advertised in order to notably ease and speed up the search of a resource by an item of end-user wireless communication equipment WT.

In the case where wireless access points AP1, ..., AP4 are part of an LTE network the chosen wireless signalling channel is a physical broadcast channel (PBCH). In this non-limiting case each dedicated information element may be comprised either in a Master Information Block (or MIB) or in a System Information Block (or SIB) that is transmitted within the physical broadcast channel.

It will be recalled that LTE is defined and specified by the 3GPP standard group. Within this standard, synchronization signals (physical layer) - Primary Synchronization Signals (PSS) and Secondary Synchronization Signals (SSS) - are used for synchronizing the UE (mobile device) to the cell site. This synchronization step allows for successively discovering the wireless information (cell site ID, wireless capabilities) for subsequent cell site selection. The Master Information Block (MIB) and the System Information Block (SIB) - within the Physical Broadcast Channel (PBCH) - are particularly dedicated to this announcement/advertising purpose prior to any network registration procedures.

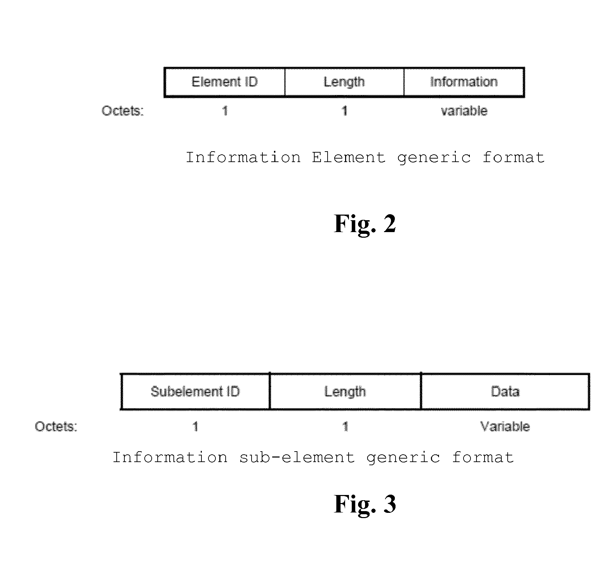

As part of the Physical Broadcast Channel (PBCH), Information Elements of variable length may be carried. The invention defines a new Information Element. It respects the standard format: [Element ID, Length, Component] (see Figure 2). With reference to Figure 2, the Element ID field will carry the value of the defined Information Element. The assignment of this value is not important as part of the invention, but nevertheless, a value must be selected. The 3GPP standard may also define reserved ranges (for future assignment).

The newly defined Information Element within the Physical Broadcast Channel (PBCH) advertises the existence of resource and capabilities accessible once connected to the wireless access point.

The Information Element may additionally contain Information sub-elements, the generic format of which is depicted in Figure 3. The sub-element ID is relevant only in the context of the Information Element.

With reference to Figures 2 and 3, the information elements and sub-elements are represented using identifiers and related values. These identifiers could be defined in multiple ways. Matching tables between identifiers and their representation would be useful in this respect.

The element identifier may be the first field of a dedicated information element, the length value may be the second field of this dedicated information element (which immediately follows the first field), and the resource description may be the third field of this dedicated information element (which immediately follows the second field).

Also for instance, the first field may comprise one octet, the second field may also comprise one octet, and the third field (Data) may comprise a variable number of octets.

Also, in a preferred embodiment, resource descriptions in dedicated information elements may further describe network (and user) requirement(s) for accessing an available resource. A network requirement is a technical characteristic that the part of the network that will be used for transmitting a resource from its source to an item of end-user wireless communication equipment must offer. For instance, it may be a bandwidth or an end-to-end transmission time or latency or else a packet loss ratio.

The invention basically only considers two information granularities (Information element and Information sub-element). Nevertheless, a deeper hierarchical classification might be used for certain scenarios, especially in the case of computing resources for which three information granularities might be better adapted.

Below, a certain number of these information elements and sub-elements will be discussed, bearing in mind that not all elements and sub-elements are intended to be presented. The general semantics of information elements are ilustrated below. For example, for an IoT objet consisting of a sensor and employing an IaaS model, an Information element would read:
Information element Id ='IoT_sensors_IaaS'

Information sub-elements are described using the following convention:
sub-element_Id : #values *** comments

A dedicated information element may describe any type of resource designating a virtual or physical element (hardware and/or software) that an entity may put at another entity's disposal. Thus, it may be a computing means, a processing means, content (such as video for example), a communication means, a storage means (possibly for mass storage), a connected object (such as Internet of Things (IoT)) or a service for instance computing capabilities. The invention particularly covers the case, without being limited thereto, where the resources are Internet of Things (IoT) connected objects, content, storage and computing facilities.

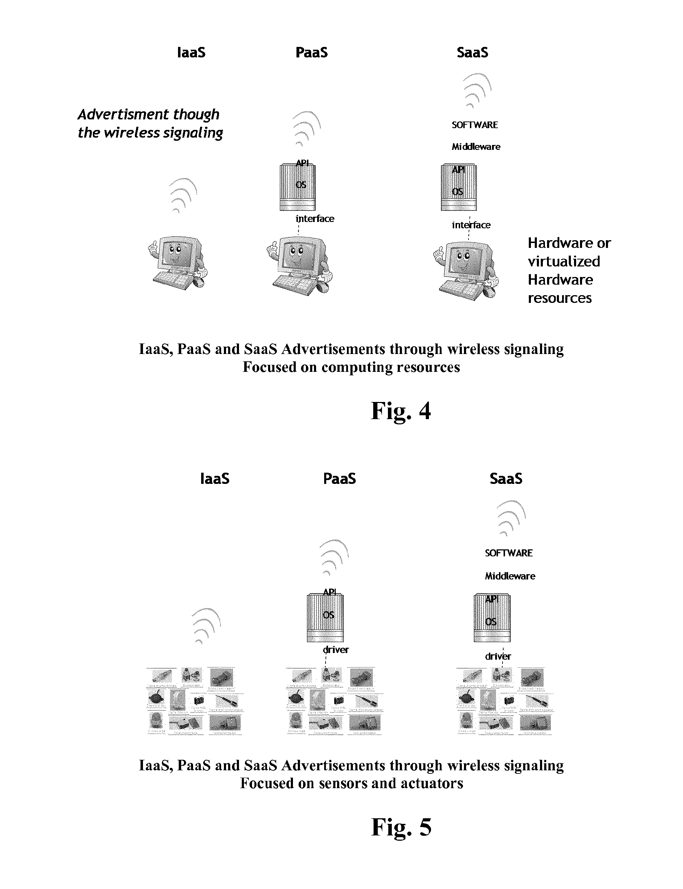

Internet of Things (IoT) connected objects and computing resources will be considered in particular in the context of IaaS (Infrastructure as a Service) or PaaS ( Platform as a Service) or SaaS (Software as a service) approaches. These general approaches are illustrated in Figures 4 and 5.

More particularly, a computing resource or an IoT resource may be part of an IaaS ("Infrastructure as a Service") or PaaS ("Platform as a Service") or else par of SaaS ("Software as a service"). In this case, at least a part of the IaaS, PaaS or SaaS must be advertised in a resource description of the corresponding computing resource or IoT resource. Each of these is considered below, firstly with reference to computing resources, then in relation to IoT resources.

### Application of the invention in the computing domain

Computing resources (and IoT resources discussed below) can be described and advertized through wireless information using 3 methodologies :
- Infrastructure as a Service- (IaaS) (see Figs. 4 and 5 for a graphical presentation) consisting in offering pure hardware resources or virtualized (i.e. ressources that are being shared by others or which result from combinations of resources) hardware resources on which an Operating System could be instantiated while selected. This model especially assumes that the computing resources considered can be interfaced with a given external Operating System
- Platform as a Service- (PaaS) (see Figs. 4 and 5 for a graphical presentation) consisting in presenting a Computing Platform/environment with described computing resources (APIs) (Application Programming Interfaces) supported by an operating system. As an extension, a high level computing platform advertisement may also comprise the description of underlying computing resources together with the supporting Operating system (Windows®, Android, release, etc ...), similarly to a purchased computer. This means that this methodology may encompass the above IaaS (Infrastructure as a Service). PaaS involves presenting a platform/ environment with the described (basic) embedded operating system driving local or remote hardware resources (through a dedicated driver or interfaces). This platform particularly supports dedicated instruction/libraries for interacting with IaaS computing resources (at a so-called South interface). This platform embeds (atomic) software building blocks (functions/ methods/APIs) that can be used by other software. In the invention, the platform resources are presented using wireless signaling. In this model, the dedicated computing platform also has a (North) interface (represented by APIs) for plugging in applications/software. These Libraries/APIs are also advertized using wireless signaling. The computing platform could be co-located or not co-located with managed IaaS resources. In case of PaaS resource advertisement, IaaS computing harware could be connected to or be connectable to the computing platform (PaaS) by any type of medium (wireline or wireless). As previously mentioned, a detailed platform advertisement may also comprise the description of underlying hardware resources together with the supported Operating System (e.g. Java) and related services. More importantly, to reduce wireless signaling overhead, PaaS advertisements are filtered by taking into account underlying hardware resources. Indeed, a lot of APIs could be available within a platform but many could present no relationship with underlying hardware resources. Accordingly there would be no interest in advertising APIs that will be never used.
- Software as a Service (SaaS) (see Figs. 4 and 5 for a graphical presentation) consisting in presenting a computing software/computing function (supported by PaaS-like computing resources) and especially by presenting the availability of such a computing function. As an illustration, an SaaS advertisement might be for video encoding software, or any software requesting intensive computations representing a cost/ performance/ mobility/ consumption issue if this latter were performed at the end-user side. This SaaS approach can consist in presenting dedicated application/software as a user-friendly interface for reaching given resources/services offered by connected/connectable (visible) objects. Interaction with this software could be performed through an (often proprietary) client application or through a web service, such as proposed by Amazon®.

In the invention, it is assumed that computing resources and capabilities and services attached to a base station or a wireless hotspot and using at least one of the three methodologies as illustrated in Figures 4 and 5 can be described and advertized through wireless information as described herein.

Nevertheless, a hierarchy may be applied to resource advertisement in which resources below a particular level might also be advertized; this means that Level 2 (PaaS) advertisement might comprises level 1 (IaaS) resources and level 3 (SaaS) advertisement might comprise level 2 (PaaS) resources, and potentially include level 1 (IaaS) resource representation.

In all cases, advertisement of PaaS resources needs to be consistent with underlying IaaS resources (i.e. there is no point in advertisings APIs with no foreseen usage through lack of underlying (virtualized) hardware/infrastructure resources. Similarly, SaaS advertisement needs to be consistent with PaaS advertisement (in its turn consistent with IaaS advertisement).

As said, only relevant computing applications (or software), i.e. attached to underlying PaaS resources attached themselves to IaaS resources, are intended for being advertised (there is no interest in advertising software not attached to underlying PaaS/IaaS resources).

For instance, an IaaS computing information sub-element may carry information related to both computing and IaaS (the computing service provider and the hardware equipment maker for advertising specific function embedded with sub-information element values). In this case an IaaS computing information sub-element may comprise:
- a supported method defined by "#method" (for instance, a Pre-boot execution Environment (or PXE) or a hypervisor name). This sub-element aims at describing how to install or trigger an Operating System through an OS image available at a server or client level,
- a supplier defined by "#name",
- a motherboard name defined by "#name",
- a bus speed defined by "#value",
- a virtualization substrate defined by "#name",
- a free cumulated CPU defined by "#value" (for instance in GHz),
- a CPU processor type defined by "#name",
- a CPU load defined by "#percentile". The dynamic/instantaneous CPU load at the advertisement time may be expressed in % value that is an average on a short time interval such as the second,
- a CPU availability time defined by "#value",
- a GPU supplier defined by "#
- a GPU name defined by "#name",
- a GPU integrated to the motherboard defined by "#boolean" (for instance YES/NO),
- a GPU bus bandwidth defined by "#value" (for instance in Gbit/s),
- an internal GPU Memory defined by "#value" (for instance in Gbytes),
- a GPU hardware acceleration defined by "#function" (for instance video decoding, transcoding, or 3D rendering).

Layer 3, layer 2 and layer 1 cache memories may be also presented but as intrinsically attached to a CPU. Thus it is also possible to advertise free flash memory (expressed in Mbytes) or an implicit or explicit availability time.

The access time and reading/writing speed of a memory supporting the operating system (and the virtualization layer if any) as well as flash memory (RAM) may be also described in a sub-element that may comprise at least one of the following fields:
- a system memory type defined by "#type" (for instance SSD, IDE, or SATA),
- a system memory amount defined by "# value" (for instance in Gbytes),
- a system memory access time defined by "#value" (for instance in µs),
- a system memory writing speed defined by "# value" (for instance in Mb/s),
- a system memory reading speed defined by "#value" (for instance in Mb/s).

RAM memory may be also described in a sub-element that may comprise at least one of the following fields:
- a RAM amount defined by "#value" (for instance in Gbytes),
- a RAM type defined by "#value" (for instance SDRAM DDR2 or SDRAM DDR3)
- a RAM access time defined by "#value" (for instance in ns),
- a RAM reading speed defined by "#value",
- a RAM writing speed defined by "#value",
- a RAM supplier defined by "#name" (for instance Kingston, Dane-elec or Samsung).

To reduce wireless signaling dedicated to information advertisement, it may be preferable to use high level description of computing resources with their implicit computing performance. This can be done by means of at least one sub-element that may comprise at least one of the following fields, for instance:
- a free cumulated CPU defined by "#10GHz",
- a system memory type defined by "#SSD",
- a system memory amount defined by "#30Gbytes",
- a RAM amount defined by "#8 Gbytes".

To take another example, a PaaS computing information sub-element regarding speed may comprise:
- a computing platform defined by "#OS name" (for instance Android, Linux, Windows®, Unix or Java),
- platform responsivity defined by "#value" (for instance in ms),
- a software framework defined by "#framework" (for instance Adobe Flash/AIR®, Java, Windows® runtime),
an API defined by "#identifier" (identification of a supported API with respect to the infrastructure (IaaS) resources).

As a further example, an SaaS computing information sub-element may comprise:
- an available application supplier defined by "#name",
- a name defined by "#software name or identifier",
- a type defined by "#software classification",
- a client application requirement defined by "#client application" (when a client/server relationship exists).
Many application/ software classification are possible:
- 1: information worker software,
- 2: content access software,
- 3: entertainment software,
- 4: educational software,
- 5: enterprise infrastructure software,
- 6: simulation software,
- 7: media development software,
- 8: product engineering software.

Only relevant computing applications (or software), i.e. attached to underlying PaaS computing resources attached themselves to IaaS computing resources are intended to be advertised (there is no point in advertising software not attached to underlying PaaS/IaaS computing resources).

### Application of the invention to Internet of Things (IoT) devices

In the invention, it is assumed that IoT resources using at least one the three methodologies discussed in detail above in relation with computing resources, can be described and advertized through wireless information (considering that the said resources are attached to a base station or a wireless hotspot) by as illustrated in Figure 5.

An IoT device may for instance be a sensor or a probe, having one or several output interfaces (for instance to be shared) and generating data on a planned or regular basis or a reactive mode in response to an external request (that requires an input/control interface), or an actuator, comprising one or several input interfaces (for instance to be shared) and arranged for performing a given action for moving or controlling a mechanism or system upon request and more generally having an action on the environnement of the user/ customer perceived by the well known five senses: sight, hearing, touch, smell and taste

An IoT device may be defined by hardware resources in an Infrastructure as a Service (IaaS) model. In this case it is considered that the IoT hardware resources are interfaced by an external Operating System (or OS) through a dedicated driver. As a consequence, the IoT resource description describes hardware resources dedicated to be interfaced by an external operating system through a dedicated driver. IoT capabilities related to IaaS can be real or virtual because they may be virtualized (i.e. shared/sliced or combined).

Alternatively, an IoT may be defined by a platform or environment in a Platform as a Service (PaaS) model. In this case the platform comprises a described embedded operating system driving local or remote hardware resources through a dedicated driver. Here, the IoT resource description will specify platform resources together with an operating system driving local or remote hardware resources capable of interfacing with other resources through a dedicated driver. This platform particularly supports dedicated instruction and/or libraries for interacting with connected objects (via a "South" interface), and embeds software building blocks (functions/ methods/APIs) that can be used by software. An IoT platform may also comprise a "North" interface (represented by APIs) for plugging in application(s) and/or software(s).

An IoT platform may be co-located with managed IoT devices or non-co-located with these latter. Moreover, IoT devices may be connected or connectable to an IoT platform by any type of medium (wired or wireless).

Moreover, a detailed platform description (in a resource description) may also comprise the description of underlying hardware resources with a supported Operating System (for instance Java) and related services. Additionally, a PaaS description may be filtered by taking into account the underlying hardware resources. Indeed, a lot of APIs may be available within a platform, and some of these APIs may have no relationship with underlying hardware resources and therefore do not have to be advertised because they will be never used.

Alternatively, an IoT resource may be defined in a Software as a Service (SaaS) model by a dedicated application acting as a user-friendly interface for reaching given resources offered by IoT. Interaction with this software application may be performed through an (often proprietary) client application or through a web service. So, the IoT resource description describes a dedicated application interfacing with a source or provider of an available resource.

As an example, an SaaS advertisement (or resource description) may describe a service consisting in measuring and regulating a room temperature.

A hierarchical classification of the information elements may exist. For instance, level 1 may be associated to IaaS, level 2 may be associated to PaaS, and level 3 may be associated to SaaS. In this case, a resource description may describe either platform (PaaS) resources with underlying hardware (IaaS) resources, or a dedicated application (or SaaS) and underlying platform resources (PaaS), or else a dedicated application (SaaS) with underlying platform resources (PaaS) and with underlying hardware resources (IaaS).

The advertisement of PaaS resources needs to be consistent with underlying IaaS resources, because it is not worth advertising an API without foreseeing usage for underlying hardware resources. Similarly, an SaaS advertisement needs to be consistent with a PaaS advertisement.

A dedicated information element may further comprise at least one sub-element describing detailed information relative either to hardware resources, or platform resources, or else a dedicated application. This allows to define at least two levels of granularity.

An IaaS IoT information sub-element may comprise:
- a sensor equipment maker defined by "#name" (for finding a related driver),
- a sensor identity defined by "#identity" (for finding a related driver (e.g. RFID),
- generated data defined by "#type" (for instance a temperature, or a current),
- a sensor principle defined by "#principle" (for instance chemical, physical, or electrical),
- a required bandwidth defined by "#value" (for instance in Mbit/s) and available between the connected object and the platform controlling/managing this connected object. This is a requirement for the South interface (or driver requirement),
- a 3D location defined by "#position" and that can be a relative position like the ones used for spaces (room, floor or building, for instance), or a deterministic position (3D coordinates and not only GPS).

A PaaS IoT information sub-element may be a sub-part of an information element indicating which IoT sensors dedicated to APIs are supported by a platform. Such PaaS information sub-element may comprise:
- a platform provider defined by "#name",
- an operating system defined by "#name" (for instance Android 4.2 or Java),
- an (IoT dedicated) software framework/libraries/API defined by "#name" (for instance Adobe Flash/AIR®, Java, Windows runtime®),
- supported libraries or APIs defined by "#list" and matching an underlying reachable or connected IaaS.

An SaaS IoT information sub-element may comprise:
- a software supplier defined by "#supplier",
- a requested software client defined by "#client",
- a software name defined by "#name" (for instance energy consumption related software or home protection software),
- an application domain defined by # software classification".

### Examples of representation of IoT sensors/probes according to each of the methodologies

### • Regarding the IaaS model:

Information element Id ='IoT_sensors_IaaS'

Information sub-elements carry information related to the IoT hardware and especially related to sensors/probes (as data generators).

### Information sub-elements

- sensor equipment maker: #name *** important for finding the related driver
- Sensor identity: #identity *** important for the finding the related driver, e.g. RFID...
- generated data : #type ***temperature, electricity; etc
- sensor principle: # principle *** chemical, physical, electrical...
- required bandwidth : #value in Mbit/s *** between the connected object and the platform controlling/managing this object; this a requirement for the South interface (driver requirement)
- 3D location : #position *** could be a relative position as used for smart spaces (room/ floor/ building, ...) or more deterministic (3D coordinates and not only GPS)

### • Regarding the PaaS model:

Information element Id ='IoT_sensors_PaaS' *** comment: this indicates which IoT-sensor-dedicated APIs are supported by a platform

### Information sub-element: # values

- Platform provider : #name
- Operating System: #name e.g. Android 4.2, Java
- (IoT-dedicated) Software framework /libraries/API : #name e.g. (Adobe Flash/AIR , Java, Windows@ runtime..)
- Supported Libraries_APIs : #list ***** matching the underlying reachable or connected IaaS
- Optionally, network requirements for platform/ end-user interaction could be advertized

### • Regarding the SaaS model:

- Information element = 'IoT_sensors_SaaS'
- Information sub-element & values
- Software supplier: # supplier
- Requested software client: #client
- Software Name : #name **** e.g. energy consumption related software, home protection software, etc
- Application domain : #software_classification

### Representation of IoT actuators according to each of the methodolgies

Only the IaaS section really differs from the IaaS section above related to Sensors/probes, other sections related to PaaS and SaaS are quite similar, with some minor modifications

### • Regarding the IaaS model

Information element ='IoT_actuators_IaaS'
Information sub-element: #values

- actuator equipment maker: #name *** important for the finding the related driver
- actuator identity: #identity *** important for the finding the related driver, e.g. RFID...
- actuator effect : #effect ************ movement, light, heat, electricity, magnetic field, sound, chemical reaction...
- -spatial influence : #volume ***********or sphere radius, etc
- time interval influence : #time
- required bandwidth : #value in Mbit/s ***comment: between the connected object and the platform controlling this object; this a requirement for the South interface (driver requirement)
- 3D location : #position *** could be a relative position as used for smart spaces (room/ floor/ building, ...) or more deterministic (3D coordinates and not only GPS)

### • Regarding the PaaS model:

Information element =' IoT_actuators_PaaS' *** comment: this indicates that the platform has APIs for interacting with actuators

### Information sub-element : #values

The invention defines Information sub-elements to carry information related to the sensors and especially concerning the related PaaS
- platform provider : #name
- Operating System: #name e.g. Android 4.2, Java
- (IoT-dedicated) Software framework /libraries/API : #name e.g. (Adobe Flash/AIR, JAVA, Windows® runtime..)
- Libraries_APIs : #list ***** matching the underlying reachable or connected IaaS

Optionally, network requirements for a platform/ end-user interaction could be advertised.

### • Regarding the SaaS model:

Information element Id = "IoT_actuators_SaaS'

### Information sub-element # values:

- Software supplier: # supplier *********(Microsoft®, Google...)
- Requested software client: #client
- Software Name : # name
- Application domain : #software_classification

Many different IoT application classifications can be used, and notably the ones mentioned below:
- 1: information worker software,
- 2: content access software,
- 3: entertainment software,
- 4: educational software,
- 5: enterprise infrastructure software,
- 6: simulation software,
- 7: media development software,
- 8: product engineering software.

As said above in relation to computing resources, only relevant software - meaning software attached to underlying PaaS resources attached themselves to IaaS resources - should be advertized (there is no sense in advertizing software not attached to underlying PaaS/IaaS resources).

Quite a good representation of computing resources is achievable with four Information sub-elements. The amount of bits dedicated to resource description can be lowered to a few bits for limiting signaled information, through the use of mapping tables and library datasheets (for automatic value description at the client side of other sub-element values).

Also for limiting the amount of advertised information that is provided to end users, the method may comprise an additional filtering step during which information elements transmitted to an item of end-user wireless communication equipment WT are filtered as a function of one or more filtering rules before being put at the disposal of an item of end-user wireless communication equipment. This makes it possible to present resources having a greater degree of relevancy to wireless clients. This additional filtering step can be implemented by software or even by suitably configured processing means equipping an item of end-user wireless communication equipment.

For instance, a rule may relate to the fact of belonging to a location-based service, or to popularity of resources, or to client profile, or else to client service requests or expectations.

It is also possible to advertise transmission link requirement(s). In this case, the server or computing service provider is aware of the capabilities of the wireless transmission source but it has no view of the reception side. Ideally, virtual link requirements need to be specified and advertised. Nevertheless, regarding emerging highly capable wireless transmission in an access area (high bandwidth/short delay, low loss) this advertisement may be ignored in many scenarii. Therefore it is more and more reasonable to consider that link requirements are met when a wireless connection is established.

It is also possible to go further by advertising user quality of service by means of a classification of computing resources. So, Premium or Best effort like information, representative of the potential computing service quality of end-user experience may be advertised within a sub-element for reducing the amount of advertised information carried by wireless signaling. This can be done by means of a sub-element that may comprise a computing QoS field defined by "#value" (premium, best effort, represented by 2 bits).

For many scenarii, advertising the availability of computing resources may not be a sufficient condition for a subsequent use by an end-user. Apart from the server/client relationship with the deployment of relevant (compatible) tools at both server and client sides, some network requirements must also be met regarding the virtual transmission link separating a server and an item of end-user wireless communication equipment 3j. Indeed, the virtual network link between a server and an item of end-user wireless communication equipment 3j needs to meet certain QoS related requirements. For instance, bandwidth requirements may be required for computations related to a Big Data context or short latency requirements may be required in the area of real time parallel/distributed computing. However, by focusing on computing resources directly attached to wireless access points API, ..., AP4, it is possible to assume that all QoS requirements are met in view of the performance of emerging wireless technologies (high bandwidth > 100 Mbit/s and short latency, offered by computing resource proximity). Therefore, by jointly advertising wireless information and available resources attached to an item of end-user wireless communication equipment, an end user can also consider features of the wireless technology as a filtering parameter for wireless access point selection. For instance, if an end user requires a high bandwidth for outsourcing intensive computations on collected data, then he would rather prefer using a 811.1AC (or LTE) compatible wireless access point instead of a limited 811.11B (or HSPA) wireless access point.

The method may also comprise an additional authorization step during which at least a part of the information elements transmitted to an item of end-user wireless communication equipment is put at the disposal of an item of end-user wireless communication equipment if the latter has the appropriate authorization. This additional authorization step can be implemented by software or even by suitably configured processing means equipping an item of end-user wireless communication equipment WT.

Thanks to the invention, available resources can be advertised in real time by means of the transmitted information elements. But a resource may become unavailable just after having been advertised, or just before an item of wireless communication equipment tries to establish a connection with the wireless access point that offers access to this resource. Therefore, a dedicated information element may further comprise a probability of availability of an available resource in a chosen time interval. Such a time interval may be reduced to a simple value.

The invention is not limited to the embodiments of method, processor configured and computer program product described above, only as examples, but it encompasses all alternative embodiments which may be considered by one skilled in the art within the scope of the claims hereafter.

## Claims

1. A method for providing information to items of end-user wireless communication equipment concerning resources and services available through a wireless access point for use by items of end-user wireless communication equipment using wireless signalling, comprising the steps of:
- maintaining at wireless access point level resource and service information relating to the use of a resource attached to said wireless access point by items of end-user wireless communication equipment in the form of a resource description,
- at said wireless access point, introducing said resource description in the form of a unique information element comprising an element identifier designating an available resource, a value defining length, and data describing this resource, optionally accompanied by one or more information sub-elements, into a specific wireless signaling channel for wireless transmission to items of end-user wireless communication able to receive said transmission,
- at an item of end-user communication equipment, receiving said specific wireless signaling channel and extracting said information element and said one or more information sub-elements if present from said specific wireless signaling channel and processing it or them jointly with processing of the wireless transmission, and
- after optional filtering, making available, to said item of end-user communication equipment resource and service information contained in the information element and sub-element(s) if present together with wireless network information in the form of a wireless network identifier whereby said resource and service information is put at the disposal of an end user at said item of end-user wireless communication equipment prior to establishing any connection with said wireless network identified by said wireless network identifier.

2. The method according to claim 1 including the step of allowing said end user at said item of end-user wireless communication equipment to establish a connection with said wireless network identified by said wireless network identifier and, if certain conditions are satisfied, make use of said resource and services.

3. The method according to claim 1 wherein the said specific wireless signalling channel is a physical broadcast channel (PBCH).

4. The method according to claim 1 or claim 3 wherein said dedicated information element can be comprised either in a Master Information Block or in a System Information Block that is transmitted within said physical broadcast channel (PBCH).

5. The method according to one of claims 1 to 4 wherein said resources are in the form of content, IoT (Internet of Things) devices, computing facilities and storage facilities, and their capabilities.

6. The method according to one of claims 1 to 5 wherein said optional filtering step of said information element and sub-element(s) if present comprises running wireless network management software on said item of end-user communication equipment to make available, to the user of said item of end-user communication equipment, said resource and service information contained in an information element and information sub-element if present taking account of at least one of the fact of belonging to a location-based service, popularity of resources, user profile, and/or user requests or expectations.

7. The method according to claim 6 including the step of performing seamless and automated selection of a relevant resource network access point where resources satisfying at least one and preferably more criteria of said filtering step are satisfied.

8. The method according to one of claims 1 to 7 wherein the said resource descriptions further describe network requirement(s) for accessing the available resource.

9. The method according to one of claims 1 to 8 wherein the said resource descriptions describe either an IaaS (Infrastructure as a Service) model comprising hardware resources defining an external operating system interfacing with a source or provider of the available resource through a dedicated driver, or a PaaS (Platform as a Service) model with an operating system driving local or remote hardware resources interfacing with a source or provider of the available resource through a dedicated driver, or else a SaaS (Software as a Service) model presenting computing software or a computing function and especially presenting the availability of such a computing function in the form of a dedicated application interfacing with a source or provider of the resource.

10. The method according to claim 9 wherein when advertising PaaS (Platform as a Service) ressources, presentation of network requirements for platform/ end-user interaction are also included in said resource descriptions.

11. The method according to one of claims 9 or 10 wherein a hierarchical classification of the information elements is provided for, a resource description describing either platform resources with underlying hardware resources, or a dedicated application and underlying platform resources, or else a dedicated application with underlying platform resources and with underlying hardware resources.

12. The method according to one of claims 9 to 11 wherein the dedicated information element further comprises at least one said sub-element describing detailed information relative either to the hardware resources, or the platform resources, or else the dedicated application.

13. The method according to one of claims 1 to 12 comprising an additional filtering step during which the information elements transmitted to an item of end-user communication equipment are filtered to limit or restrict presentation of resource descriptions to an item of end-user wireless communication equipment.

14. The method according to claim 13 wherein said additional filtering step performed at a wireless access point level is adapted to limit the number of advertised resources in order to only present resources identified as being relevant to end users.

15. The method according to one of claims 13 or 14 including an additional filtering step performed at a wireless access point level for limiting the number of advertised resources presented to end-user communication equipment by taking account of data collected on requests for resources and optionally user expectations in order to thereby prioritize for presentation to end end-user communication equipment those IoT, storage, content or computing resources which best meet end-user service requests and expectations..

16. The method according to one of claims 5 to 15 wherein the method includes advertising user quality of service by means of a classification of computing resources in a sub-element that comprises a computing QoS field for reducing the amount of advertised information carried by wireless signaling.

17. The method according to claim 2 wherein, following the advertising of resources and service capabilities to end users, the method includes the step of, before allowing said end user at said item of end-user wireless communication equipment to establish a connection with said wireless network identified by said wireless network identifier and make use of said resource and services, the said certain condition to be satisfied comprises applying an authorization step allowing access to the resources and services selected by an end user, taking account of considerations such as privacy, security and integrity requirements.

18. The method according to one of claims 1 to 17 wherein a dedicated information element further comprises a probability of availability of the available resource within a chosen time interval.

19. The method according to claim 18 wherein said dedicated information element advertises real time availability of resources accessible once connected to a wireless access point and optionally in the case of unavailability or connection mismatch, an indication of a probability of resource availability at a given time or after a certain time interval.

20. The method according to one of claims 1 to 19 wherein, before advertising resources to end users, the method includes, where an administrator of the wireless access point managing a network can derive knowledge of resources owned by its customers from at least said information elements, the step of proposing resources to other end-user communication equipment on a per-customer basis or on the basis of a community consisting of machines or people sharing a common point/interest.

21. A computer program product comprising a set of instructions arranged, when executed by processing means, for performing at least one step of the method according to one of the preceding claims in order to provide information relative to resources, accessible via wireless access points, to items of end-user wireless communication equipment within the connectivity area of these wireless access points.

22. Processing means suitably configured for introducing, at a wireless node of a wireless network, a dedicated information element comprising at least one element designating an available resource, a value defining length, and a resource description describing said available resource and one or more information sub-elements if present into a specific channel, preferably a physical broadcast channel (PBCH) of a wireless signalling channel for transmission within said channel to at least one item of end-user wireless communication equipment which is within the connectivity area of said wireless access point.

23. Processing means suitably configured for extracting, at an item of end-user wireless communication equipment, a dedicated information element comprising at least one element designating an available resource, a value defining length, and a resource description describing said available resource and one or more information sub-elements if present from a physical broadcast channel (PBCH) of a wireless signalling channel received at said node and processing it or them simultaneously with the processing of the wireless transmission, whereby information on resources present in said dedicated information element and one or more information sub-elements if present can be put at the disposal of at least one item of end-user wireless communication equipment when the latter is within the connectitivity area of a wireless access point.
